# EUROPÄISCHE PATENTSCHRIFT

(11) **EP 1 846 310 B1**
(45) Veröffentlichungstag und Bekanntmachung des Hinweises auf die Patenterteilung: **27.01.2010**
(21) Anmeldenummer: 06701628.7
(22) Anmeldetag: 07.02.2006
(51) Int. Cl.: B65G 15/02, B65G 21/16

(54) **KURVENBANDF\RDERER**
CURVED BELT CONVEYOR
CONVOYEUR À COURROIE CURVILIGNE

(30) Priorität: 10.02.2005 CH 226052005
(43) Veröffentlichungstag der Anmeldung: 24.10.2007
(73) Patentinhaber: ROBERT BOSCH GMBH, 70442 Stuttgart (DE)
(72) Erfinder: JENNY, Urs, CH-8753 Mollis (CH)
(74) Vertreter: Clerc, Natalia
(86) Internationale Anmeldenummer: PCT/CH2006/000079
(87) Internationale Veröffentlichungsnummer: WO 2006/084407

(56) Entgegenhaltungen:
- CH-A- 657 827
- DE-A1- 3 826 953

## Beschreibung

### Technisches Gebiet

Die Erfindung betrifft einen Kurvenbandförderer gemäss Oberbegriff des Patentanspruchs 1, der aus der CH 657 827A5 bekannt ist.

### Stand der Technik

Ein gattungsgemässer Kurvenbandförderer ist beispielsweise aus CH-A-657'827 bekannt. Er weist ein Trägergestell auf, welches eine sich über einen Viertelkreis erstreckende Förderfläche trägt. Die Förderfläche ist von einem bandförmigen endlos umlaufenden Fördergurt gebildet, welcher jeweils an beiden Enden des Viertelkreises über Umlenkrollen geführt ist. Kurvenaussenseitig ist auf dem Trägergestell eine gekrümmte Führungsschiene angeordnet, in welcher eine über einen Motor angetriebene Förderkette geführt ist. Das Förderband ist über Mitnehmer mit dieser Förderkette verbunden und wird von ihr in Förderrichtung bewegt. Die Führungsschiene ist in Form einer gekrümmten Zarge an einzelnen vertikalen Stützen des Trägergestells angeschraubt. An der kurveninnenseitigen Wange der Führungsschiene sind erste Enden von Querträgern befestigt, welche mit ihren zweiten Enden jeweils an einer kurveninnenseitigen Wange einer inneren Zarge angeschraubt sind. Diese Kurvenbahnen haben sich in der Praxis bewährt. Ihre Montage gestaltet sich jedoch aufwendig und benötigt relativ viel Fingerspitzengefühl, da die kleinste Massabweichung des Gestells von einem idealen Viertelkreis zu einer Störung im Förderbetrieb führen kann.

Auch DE-A-34'21'413, DE-A-198'05'204, US-A-4'887'708 und US-A-5'988'363 zeigen Kurvenbandförderer, deren Trägergestelle relativ kompliziert und zeitaufwendig zusammengeschraubt werden müssen.

EP-A-0'818'404 offenbart einen Kurvenbandförderer mit einer Spannungsvorrichtung für die Förderkette.

Aus der CH 657 827 A5 ist ein Kurvenbandförderer mit einem Trägergestell und einer Führungsschiene für eine Förderkette bekannt. Die Führungsschiene ist an dem Trägergestell befestigt und führt die Förderkette. Der Kurvenbandförderer weist ein Förderband auf, das entlang einer teilkreisförmigen Förderfläche mit Hilfe der Förderkette transportiert wird. Das Trägergestell weist eine äussere Zarge, eine innere Zarge und radial verlaufende Stege auf. An der äusseren und der inneren Zarge sind Halter vorgesehen, in welche die Stege eingesetzt werden.

Ein Kurvengurtförderer gemäss der DE 3 826 953 A1 weist einen mehrteiligen kurvenförmigen Trägerrahmen auf, wobei alle Einzelteile des Rahmens ineinander steckbar sind. Der Rahmen umfasst zwei sich gegenüberliegende Trägerprofile, die durch Traversen miteinander verbunden sind. Die Trägerprofile werden mit Hilfe der Traversen zusammengesteckt und verschraubt. An den Trägerprofilen sind rohrartige Fortsätze angebracht, die jeweils nach innen zur Förderfläche weisen und deren Rohröffnungen ein Verbindungsloch zur Aufnahme der Enden der Traversen bilden. Die Verbindungslöcher in Form der Öffnungen der rohrartigen Fortsätze sind vertikal zur Förderfläche des Kurvengurtförderers ausgerichtet.

### Darstellung der Erfindung

Es ist deshalb eine Aufgabe der Erfindung, einen Kurvenbandförderer zu schaffen, welcher einfach und kostengünstig herstellbar und montierbar ist.

Diese Aufgabe löst ein Kurvenbandförderer mit den Merkmalen des Patentanspruchs 1.

Dieser Kurvenbandförderer umfasst ein Trägergestell, mindestens eine am Trägergestell befestigte Führungsschiene, eine in der Führungsschiene geführte Förderkette und ein mittels der Förderkette entlang einer kreissektorförmigen Förderfläche bewegbares Förderband. Das Trägergestell weist einen äusseren Trägerrahmen, einen inneren Trägerrahmen und Radialstreben auf. Die Radialstreben sind steckbar mit den äusseren und inneren Trägerrahmen verbindbar.

Hierzu sind Verbindungslöcher vorhanden, welche vorzugsweise mittels Laserschneiden, durch Stanzen oder mit einem anderen mass- und positionsgenauen Bearbeitungsverfahren hergestellt sind. Mindestens einer der Trägerrahmen weist eine horizontal zur Förderfläche vorlaufende Trägerplatte mit den verbindungslöchern auf.

Die äusseren und inneren Trägerrahmen stellen dank der steckbaren Verbindung eine genaue Positionierung der Radialstreben sicher. Dies führt zu einem äusserst genauen Chassis oder Trägergestell mit kleinem Montageaufwand. Der Aufwand wird noch verkleinert bzw. die Positionierung erhöht, wenn die Trägerrahmen, bzw. mindestens einer davon, eine horizontal verlaufende Trägerplatte aufweist.

Dank den vorgegebenen, massgenauen Verbindungsstellen lassen sich die einzelnen Teile und insbesondere die Führungsschienen für das obere und untere Trum des Förderbandes schnellstmöglich massgenau positionieren.

Die Montagezeit wird deutlich verkürzt. Abgleich- und Nachjustierzeiten werden dank der Masshaltigkeit bei der Montage kaum noch benötigt. Zudem ist die Herstellung der einzelnen Trägerplatten kostengünstig.

In einer bevorzugten Ausführungsform ist die Montage und der Unterhalt der Förderkette erleichtert, da sich ihre Kettenspannung mittels einer Gasdruckfeder einstellen lässt. Da die Gasdruckfeder nachfedern kann, können Belastungsstösse aufgefangen werden, so dass sie nicht in die Kette gelangen. Der Verschleiss der Kette wird reduziert. Diese Art der Kettenspannung lässt sich nicht nur beim oben erwähnten erfindungsgemässen Kurvenbandförderer, sondern auch bei anderen bekannten, insbesondere auch bei geradlinig verlaufenden Förderbahnen, einsetzen.

In einer bevorzugten Ausführungsform weist die Förderkette äussere Laschen mit vergrösserter Fläche auf, welche neben inneren Laschen auf derselben Seite der Förderkette angeordnet sind. Die zugehörige Führungsschiene weist eine entsprechend gestufte Nut auf. Diese Anordnung erhöht die Reibungsfläche und verhindert ein ungewolltes Herausspringen der Kette aus ihrer Führung Die Flächenpressung oberhalb und unterhalb der Lasche ist circa gleich gross, so dass die Kette nicht verdreht werden kann. Dies vermindert die Gefahr der Abnützung der als Profilschiene ausgebildeten Führungsschiene. Auch diese asymmetrische Kette lässt sich bei anderen bekannten, insbesondere auch bei geradlinig verlaufenden Förderbahnen, einsetzen.

Weitere vorteilhafte Ausführungsformen gehen aus den abhängigen Patentansprüchen hervor.

### Kurze Beschreibung der Zeichnung

Im folgenden wird der Erfindungsgegenstand anhand eines bevorzugten Ausführungsbeispiels, welches in der beiliegenden Zeichnung dargestellt ist, erläutert. Es zeigen:
- Figur 1: eine Ansicht eines erfindungsgemässen Kurvenbandförderers von oben, ohne Abdeckplatte;
- Figur 2: eine perspektivische Ansicht eines Trägergestells des Kurvenbandförderers gemäss Figur 1, ohne Führungsschiene und Förderband;
- Figur 3: eine weitere perspektivische Ansicht des Trägergestells gemäss Figur 2 ohne vertikale Stützen und von einer anderen Seite betrachtet;
- Figur 4: eine perspektivische Ansicht des Kurvenbandförderers gemäss Figur 1 ohne Förderband und Abdeckplatte;
- Figur 5: eine Ansicht des Kurvenbandförderers gemäss Figur 4 von oben;
- Figur 6: eine perspektivische Ansicht des Kurvenbandförderers gemäss Figur 1 ohne Förderband, jedoch mit Abdeckplatte;
- Figur 7: einen Querschnitt durch den erfindungsgemässen Kurvenbandförderer gemäss Figur 6;
- Figur 8: eine perspektivische Ansicht eines Abschnitts einer Förderkette mit Verbindungsbügel und Mitnehmerkopf des erfindungsgemässen Kurvenbandförderers gemäss Figur 1 und

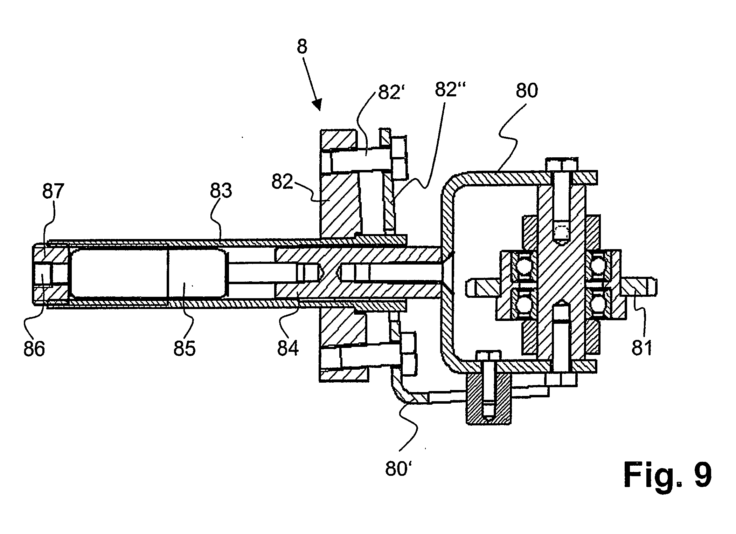

- Figur 9: einen Querschnitt durch einen Kettenspanner des erfindungsgemässen Kurvenbandförderers gemäss Figur 1.

### Wege zur Ausführung der Erfindung

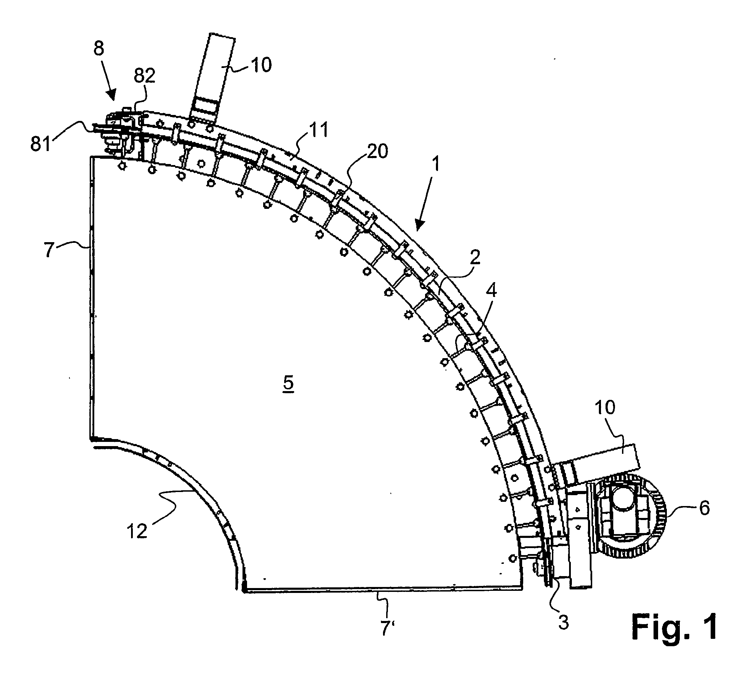

In Figur 1 ist ein erfindungsgemässer Kurvenbandförderer von oben dargestellt. Er weist ein Trägergestell 1 auf, welches in diesem Beispiel annähernd einen Viertelkreis beschreibt. Diese Form ist bevorzugt, es ist jedoch auch möglich, dass sich der Förderer bzw. die Förderebene über einen Teilkreis mit grösserem oder kleinerem Winkel erstreckt.

Das Trägergestell ist vorzugsweise aus Metall, insbesondere aus Aluminium oder Stahl gefertigt.

Das Trägergestell 1 weist vertikale Stützen 10 auf, an welchen ein entlang der Förderebene verlaufender, entsprechend gekrümmter äusserer Trägerrahmen 11 befestigt ist. Konzentrisch zum äusseren Trägerrahmen 11 verläuft ein innerer Trägerrahmen 12.

Am Anfang und Ende der Förderstrecke sind Umlenkrollen 7, 7' angeordnet, welche sich vorzugsweise in radialer Richtung erstrecken. Die Förderebene ist vorzugsweise eine horizontale plane Ebene, sie kann sich jedoch auch in einem Winkel zur Horizontalen erstrecken.

Auf dem Trägergestell 1 ist eine obere und eine untere Führungsschiene 2, 2' angeordnet. In Figur 1 ist nur die obere Führungsschiene 2 sichtbar. In diesen Führungsschienen 2, 2' ist eine endlos umlaufende Förderkette 3 geführt und verschiebbar gehalten. Die Förderkette 3 wird mittels eines Antriebsmotors 6 angetrieben. Es kann ferner eine Spannvorrichtung 8 vorhanden sein, um die Förderkette 3 zu spannen.

Radial ausgerichtete Mitnehmer 4 sind mit einem ersten Ende an der Förderkette 3 befestigt und mit einem zweiten Ende an einem endlos umlaufenden Förderband oder - gurt 5 bekannter Art. Das Förderband 5 verläuft in der Förderebene und wird durch die Umlenkrollen 7, 7' in ein oberes und unteres Trum unterteilt. Das obere Trum definiert dabei die plane Förderfläche.

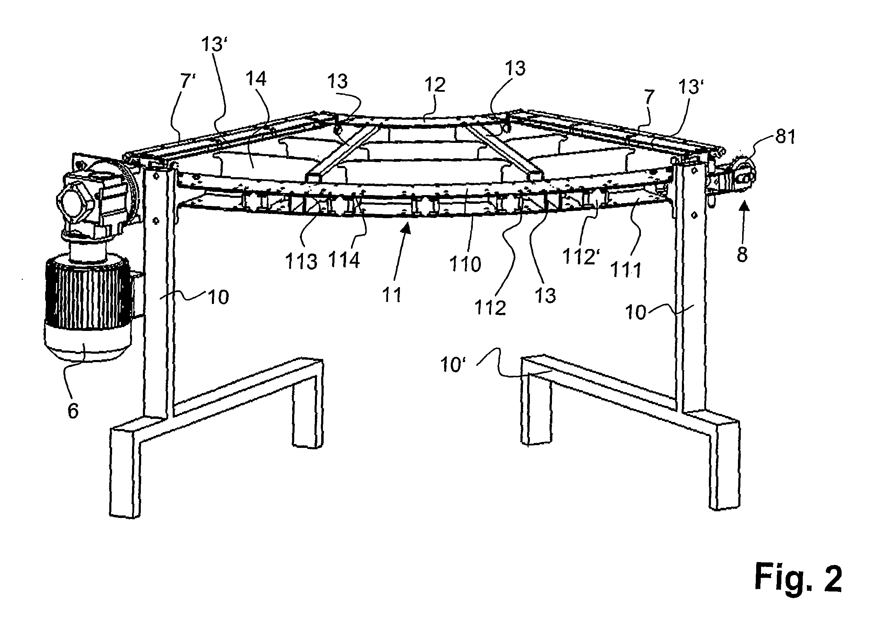

Anhand der Figur 2 lässt sich das Trägergestell 1 des erfindungsgemässen Kurvenbandförderers gut erkennen. Der äussere Trägerrahmen 11 weist eine flache untere und eine flache obere Trägerplatte 111, 110 auf, welche beide entsprechend der Förderstrecke gebogen sind und parallel zur bzw. in der Förderebene verlaufen. Zudem sind sie beabstandet aber parallel zueinander verlaufend angeordnet. Die Trägerplatten 110, 111 können an die vertikalen Stützen 10 angeschraubt oder steckbar mit diesen verbunden sein. Eine einmal hergestellte steckbare Verbindung wird vorzugsweise unlösbar bzw. irreversibel fixiert, insbesondere durch Verschweissung oder durch Löten.

Der äussere und der innere Trägerrahmen 11, 12 sind über Radialstreben miteinander verbunden. Diese Radialstreben werden am Anfang und Ende der Förderstrecke von Kopfteilaufhängungen 13' gebildet. Diese Kopfteilaufhängungen 13' sind vorzugsweise Profilleisten oder flache Leisten. Zwischen diesen Kopfteilaufhängungen 13' sind radial verlaufende Querstreben 13 vorhanden, welche ebenfalls Radialstreben vorzugsweise in Form von U-Profilen, sind. Erfindungsgemäss sind diese Radialstreben 13, 13' steckbar mit den äusseren und inneren Trägerrahmen 11, 12 verbunden. Diese Verbindung wird vorzugsweise bei der Montage irreversible fixiert, z.B. durch Schweissen oder Löten. Irreversible Fixierung bedeutet in diesem Zusammenhang, dass nur durch entsprechende Gewaltanwendung die Verbindung gelöst werden kann.

Die obere und die untere äussere Trägerplatte 110, 111 weisen hierzu erste Verbindungslöcher 113 auf. Diese Löcher 113 sind bei der Montage des Kurvenbandförderers bereits vorgefertigt. Vorzugsweise werden sie bei der Herstellung der Platten 110, 111 durch Laserschneiden, Stanzen oder ein anderes massgenaues und positionsgenaues Bearbeitungsverfahren hergestellt.

Vorzugsweise weisen die Trägerplatten 110, 111 zweite Verbindungslöcher 114 auf, welche wie die ersten auf dieselbe Weise vorgefertigt sind. Die zweiten Verbindungslöcher 114 der oberen und unteren Trägerplatte 110, 111 fluchten miteinander und dienen zur Aufnahme von entsprechenden Stiften oder Nasen von vertikal ausgerichteten Rippen 112. Diese Rippen 112 dienen als Distanzhalter zwischen den zwei Trägerplatten 110, 111 und geben dem äusseren Trägerrahmen 11 gleichzeitig Stabilität. Die Rippen 112 können als einfache Leisten ausgebildet sein. Vorzugsweise sind sie jedoch liegende U-Profile, deren die zwei Schenkel des U's verbindender Steg 112' nach aussen gerichtet ist. Das U-Profil weist an den entsprechenden Stellen vorstehende Einrastnasen für die Steckverbindung auf.

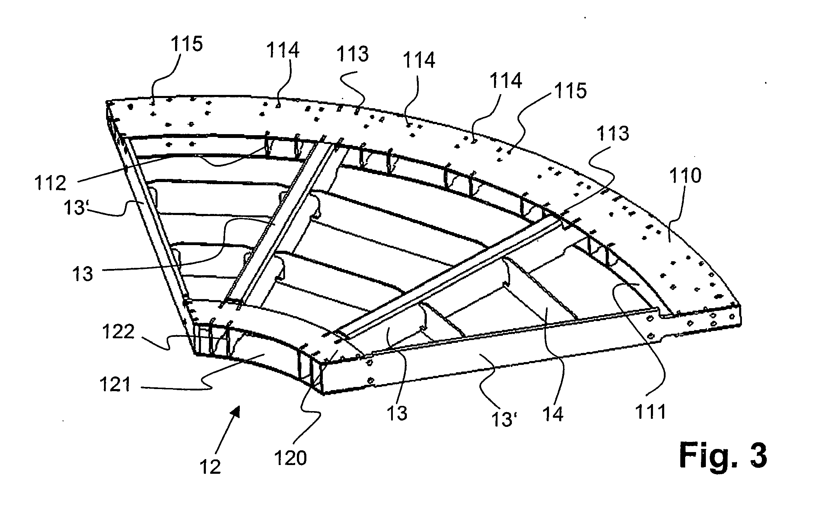

Anhand von Figur 3 ist erkennbar, dass der innere Trägerrahmen 12 vorzugsweise gleich aufgebaut ist und ebenfalls über eine obere und eine untere, über Stege oder Rippen verbundene Trägerplatten 120, 121 aufweist. Auch hier sind die Rippen 122 in Verbindungslöcher der Platten 120, 121 steckbar.

Auch diese Rippen 112, 122 der inneren der inneren und äusseren Trägerplatten 110, 111, 120, 121 werden vorzugsweise unlösbar fixiert, insbesondere durch Schweissen oder Löten.

Ferner können die Querträger 13 über Längsstreben 14 voneinander distanziert gehalten sein. Auch diese Längsstreben 14 lassen sich über Steckverbindungen an den Querträgern 13 befestigen. Sie lassen sich jedoch auch einfach zwischen diesen auf konventionelle Art ohne Steckverbindung einschweissen.

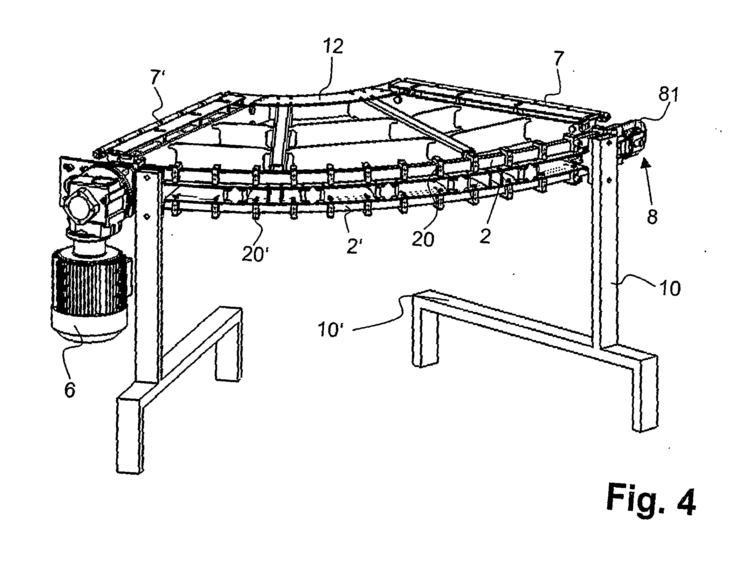

In der Darstellung gemäss Figur 4 ist erkennbar, dass nur der äussere Trägerrahmen 11 an vertikalen Stützen 10 befestigt ist und der innere Trägerrahmen 12 freihängend ausgebildet ist. Damit das Trägergestell 1 stabil steht, sind die vertikalen Stützen 10 mit entsprechend langen Füssen 10' versehen. Es ist jedoch selbstverständlich möglich, auch den inneren Trägerrahmen 12 an eigenen vertikalen Stützen 10 zu befestigen.

In dieser Figur 4 sind zudem die obere und die untere Führungsschiene 2, 2' auf der oberen respektive der unteren äusseren horizontal verlaufende Trägerplatte 110, 111 angeordnet. Die Führungsschienen 2, 2' sind jeweils aus einer entsprechend der Kurvenbahn gebogenen Profilschiene gebildet, welche auf einer Längsseite offen, und auf der anderen Längsseite geschlossen ausgebildet ist. Die geschlossene Seite ist nach aussen, die offene nach innen gerichtet. Die Führungsschienen 2, 2' weisen in regelmässigen Abständen Halter 20, 20' auf, welche auf den Trägerplatten 110, 111 befestigt sind.

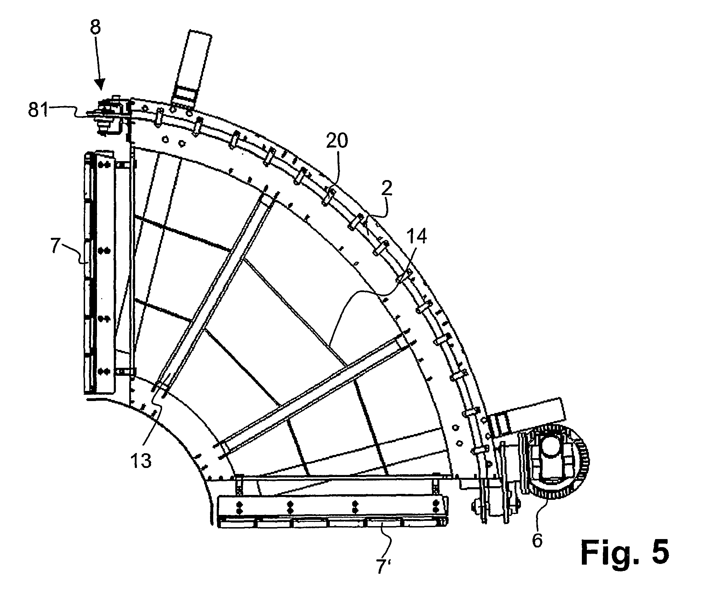

Sie lassen sich aufstecken oder, wie hier dargestellt, verschrauben. Entsprechende dritte Verbindungslöcher sind in der Figur 3 mit 115 beschriftet. Figur 5 zeigt diese Anordnung in der Ansicht von oben.

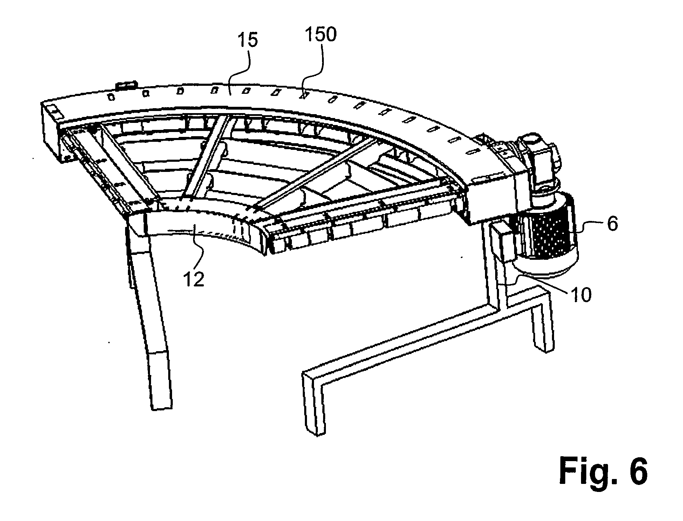

Mindestens die obere, vorzugsweise auch die untere Führungsschiene 2, 2' sind mittels einer Abdeckplatte 15 zugedeckt, um Verschmutzungen zu vermeiden. Dies ist in Figur 6 erkennbar. Die obere bzw. die untere Abdeckplatte 15 ist wiederum über hier nicht dargestellte Rippen mit der oberen bzw. unteren Trägerplatte 110, 111 steckbar verbunden. Diese Verbindung ist vorzugsweise reversibel lösbar, um den Unterhalt des Kurvenbandförderers zu erleichtern.

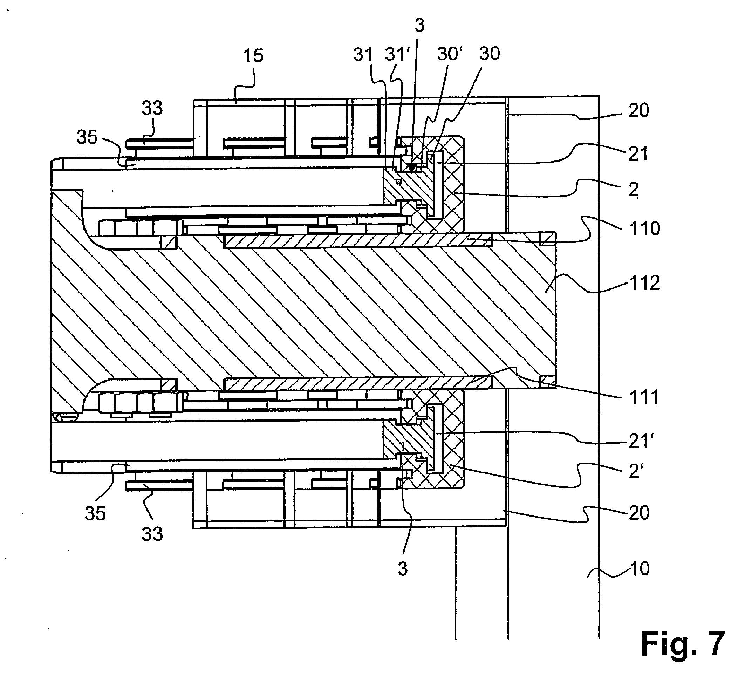

Figur 7 zeigt einen Querschnitt durch die Trägerplatten 110, 111, die Rippen 112, die Abdeckplatten 15 sowie die Führungsschienen 2, 2'. Hier ist nun erkennbar, wie die Förderkette 3 in den Führungsschienen 2, 2' geführt gehalten ist. Das obere Trum der endlosen Förderkette 3 verläuft dabei in der oberen Führungsschiene 2, das untere Trum in der unteren 2'. Die Führungsschienen 2, 2' weisen hierzu eine Nut 21, 21'auf, welche äussere und innere erste Laschen 30, 30' der Förderkette 3 aufnimmt.

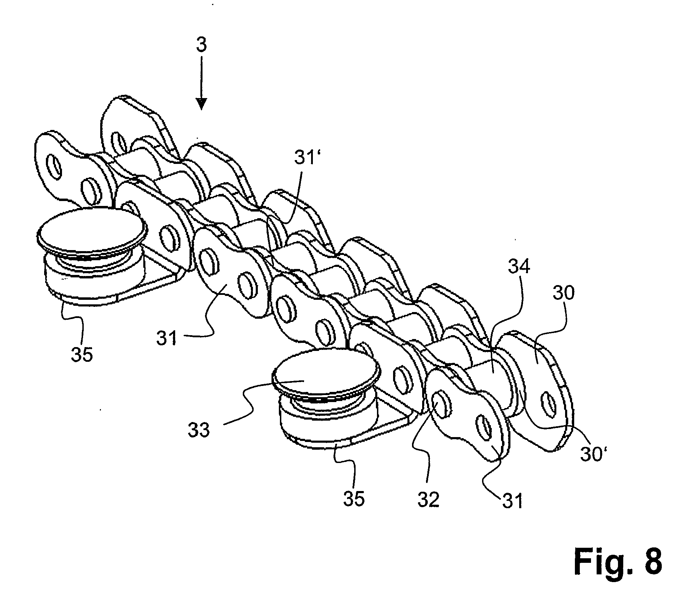

Diese Laschen sind in Figur 8 gut erkennbar. Die Förderkette 3 ist eine Gliederkette bekannter Art mit ersten äusseren und inneren erste Laschen 30, 30', welche auf einer ersten, äusseren Seite der Förderkette 3 angeordnet sind, und mit zweiten äusseren und inneren Laschen 31, 31', welche auf einer zweiten, inneren Seite der Förderkette 3 verlaufen. Die Laschen 30, 30', 31, 31' sind über Verbindungsbolzen 32 miteinander verbunden, wobei zwischen den ersten und zweiten inneren Laschen 30', 31' Distanzhülsen 34 vorhanden sind.

Die ersten äusseren Laschen 30 weisen nun eine grössere Fläche auf als die ersten inneren Laschen 30'. Vorzugsweise sind die übrigen Laschen 30', 31, 31' gleich ausgebildet, so dass nur die ersten äusseren Laschen 30 grösser sind als die anderen, wie dies in Figur 8 dargestellt ist. Die ersten äusseren und inneren Laschen 30, 30' sind in den Nuten 21, 21' der Führungsschienen 2, 2' geführt, wobei diese Nuten 21, 21' entsprechend gestuft ausgebildet sind (siehe Figur 7). Dadurch liegt die grösser ausgebildete Fläche der äusseren Laschen 30 an der Nutwand an, so dass eine grössere Reibungs- und Führungsfläche entsteht.

An einem Teil der zweiten äusseren Laschen 31 sind Verbindungsbügel 35 angeformt, welche je einen Mitnehmerknopf 33 tragen. Der Mitnehmerknopf 33 weist eine umlaufende Nut auf. Über diesen Mitnehmerknopf 33 lässt sich jeweils ein hier nicht dargestellter Mitnehmer 4 stülpen und in der Nut halten. Das andere Ende des Mitnehmers 4 ist mittels Niet- oder Schraubverbindung oder mittels anderen bekannten Befestigungsarten am Förderband 5 fixiert.

Um eine für die Förderung der Förderkette 3genügende Spannung aufrechtzuerhalten bzw. einzustellen, ist vorzugsweise der Kettenspanner 8 vorgesehen. Dieser ist über eine Befestigungsplatte 82 an einem Ende der Förderstrecke, vorzugsweise an ihrem Anfang, am Trägergestell 1 befestigt, vorzugsweise angeschraubt. An der Befestigungsplatte 82 ist über Befestigungsschrauben 82' ein Zwischenbügel 82" angeordnet, welcher einen ersten Schenkel eines u-förmigen Kettenradhalters 80 trägt. Der Kettenradhalter 80 trägt ein Kettenrad 81. Um dieses Kettenrad 81 läuft die endlose Förderkette 3 vom unteren in das obere Trum. Der Kettenradhalter 80 ist an seinem Verbindungssteg 80' mit einer Schraube in einer Achse 84 gehalten. Diese Achse 84 verläuft innerhalb eines Rohrs 83, welches die Befestigungsplatte 82 durchsetzt und in dieser gehalten ist. Am anderen Ende der Achse 84 ist eine Gasdruckfeder 85 angeordnet, welche ebenfalls im Rohr 83 gehalten ist. Die Lage der Gasdruckfeder ist mittels einer Einstellschraube 87 und einem darin verschiebbaren Gewindestift 86 einstellbar. Somit lässt sich die Lage des Kettenradhalters 80 relativ zur Befestigungsplatte 82 und somit zum Trägergestellt 1 mittels der Gasdruckfeder 85 auf einfache Art und Weise, jedoch sehr gezielt, einstellen.

Der erfindungsgemässe Kurvenbandförderer ermöglicht eine kostengünstige, schnelle und präzise Montage.

### Bezugszeichenliste

- 1: Trägergestell
- 10: vertikale Stütze
- 10': Fuss
- 11: äusserer Trägerrahmen
- 110: obere Trägerplatte
- 111: untere Trägerplatte
- 112: Rippe
- 112': Steg
- 113: Erste Verbindungslöcher
- 114: Zweite Verbindungslöcher
- 115: Dritte Verbindungslöcher
- 12: Innerer Trägerrahmen
- 120: obere Trägerplatte
- 121: untere Trägerplatte
- 122: Rippe
- 13: Querträger
- 13': Kopfteilauthängung
- 14: Längsstreben
- 15: Abdeckplatte
- 2: obere Führungsschiene
- 2': untere Führungsschiene
- 20: oberer Halter
- 20': unterer Halter
- 21: obere Nut
- 21': untere Nut
- 3: Förderkette
- 30: erste äussere Lasche
- 30': erste innere Lasche
- 31: zweite äussere Lasche
- 31': zweite innere Lasche
- 32: Verbindungsbolzen
- 33: Mitnehmerknopf
- 34: Distanzhülse
- 35: Verbindungsbügel
- 4: Mitnehmer
- 5: Förderband
- 6: Antriebsmotor
- 7: Umlenkrolle
- 7': Umlenkrolle
- 8: Kettenspanner
- 80: Kettenradhalter
- 80': Verbindungssteg
- 81: Kettenrad
- 82: Befestigungsplatte
- 82': Befestigungsschraube
- 82": Zwischenplatte
- 83: Rohr
- 84: Achse
- 85: Gasdruckfeder
- 86: Gewindestift
- 87: Einstellschraube

## Patentansprüche

1. Kurvenbandförderer mit einem *teilkreisförmigen* Trägergestell (1) *für ein entlang einer teilkreisförmigen Förderfläche bewegbares Förderband (5),* mindestens einer am Trägergestell (1) befestigten Führungsschiene (2, 2'), einer in der Führungsschiene (2, 2') geführten Förderkette (3) und einem mittels der Förderkette (3) entlang *der* Förderfläche bewegbaren Förderband (5), wobei das Trägergestell (1) einen *gekrümmten* äusseren Trägerrahmen (11), einen *konzentrisch zum äusseren Trägerrahmen verlaufenden* inneren Trägerrahmen (12) und Radialstreben (13, 13') aufweist, wobei die Radialstreben (13, 13') steckbar mit den äusseren und inneren Trägerrahmen (11, 12) verbindbar sind, **dadurch gekennzeichnet, dass** der innere und äussere Trägerrahmen (11, 12) erste Verbindungslöcher (113) zur Aufnahme von Stecknasen der Radialstreben (13, 13') aufweisen *und mindestens einer der Trägerrahmen (11; 12) eine horizontal zur Förderfläche verlaufende Trägerplatte (110; 111; 120; 121) mit den Verbindungslöchern (113) aufweist.*

2. *Kurvenbandförderer nach Anspruch 1, wobei der äussere und*/*oder innere Trägerrahmen (11, 12) zwei horizontal zur Förderfläche verlaufende Trägerplatten (110, 111) aufweist, die entsprechend der Förderfläche gebogen sind.*

3. Kurvenbandförderer nach Anspruch 2,
wobei beide Trägerplatten (110, 111) zweite Verbindungslöcher (114) aufweisen, und wobei der Trägerrahmen (11) ferner *vertikal ausgerichtete* Rippen (112) *mit Stiften* aufweist, *wobei die Stifte* in die zweiten Verbindungslöcher (114) der oberen und unteren Trägerplatte (110, 111) steckbar sind, um die zwei Trägerplatten (110, 111) miteinander zu verbinden.

4. Kurvenbandförderer nach einem der vorherigen Ansprüche, wobei die ersten und/oder zweiten Verbindungslöcher mittels Laserschneiden oder durch Stanzen hergestellt sind.

5. Kurvenbandförderer nach einem der vorherigen Ansprüche, wobei die Radialstreben Querstreben (13) umfassen, welche aus einem U-Profil gefertigt sind.

6. Kurvenbandförderer nach einem der vorherigen Ansprüche, wobei die Radialstreben Kopfteilaufhängungen (13') umfassen, welche den äusseren und inneren Trägerrahmen (11, 12) an einem Anfang und einem Ende der Förderstrecke miteinander verbinden.

7. Kurvenbandförderer nach einem der vorherigen Ansprüche, wobei der äussere Trägerrahmen (11) eine in der oder parallel zur Förderfläche verlaufende Trägerplatte (110) aufweist, wobei auf dieser Trägerplatte (110) die Führungsschiene (2, 2') angeordnet ist.

8. Kurvenbandförderer nach einem der vorherigen Ansprüche, wobei annähernd das gesamte Trägergestell (1) aus Elementen besteht, welche mittels Steckverbindungen zusammengefügt sind.

9. Kurvenbandförderer nach einem der vorherigen Ansprüche, wobei die Förderkette (3) äussere und innere erste Laschen (30, 30') aufweist, welche auf derselben, dem Förderband (5) abgewandten Seite der Förderkette (3) verlaufen und wobei die äusseren ersten Laschen (30) eine grössere Fläche aufweisen als die inneren ersten Laschen (30').

10. Kurvenbandförderer nach Anspruch 9, wobei die mindestens eine Führungsschiene (2, 2') eine Führungsnut (20, 20') zur Aufnahme der inneren und äusseren ersten Laschen (30, 30') aufweist, wobei die Führungsnut (20, 20') entsprechend den Flächen der inneren und äusseren ersten Laschen (30, 30') gestuft ausgebildet ist.

11. Kurvenbandförderer nach einem der Ansprüche 1 bis 10, wobei die Förderkette (3) mittels eines Kettenspanners (8) einstellbar ist und wobei der Kettenspanner (8) eine Gasdruckfeder (85) aufweist.

## Claims

1. A curved band conveyor with a carrier stand (1) in the form of a part circle for a conveyor band (5) movable along a conveying surface in the form of a part circle, at least one guide rail (2, 2') fastened to the carrier stand (1), a conveyor chain (3) guided in the guide rail (2, 2') and a conveyor band (5) movable by means of the conveyor chain (3) along the conveying surface, the carrier stand (1) having a curved outer carrier frame (11), an inner carrier frame (12) running concentrically to the outer carrier frame and radial struts (13, 13'), wherein the radial struts (13, 13') can be connected in a pluggable way to the outer and inner carrier frames (11, 12), **characterized in that** the inner and outer carrier frames (11, 12) have first connecting holes (113) for the reception of plug noses of the radial struts (13, 13') and at least one of the carrier frames (11; 12) has a carrier plate (110; 111; 120; 121) with the connecting holes (113), which carrier plate (110; 111; 120; 121) runs horizontally to the conveying surface.

2. The curved band conveyor as claimed in claim 1, the outer and/or inner carrier frame (11, 12) having two carrier plates (110, 111) running horizontally to the conveying surface, which carrier plates (110, 111) are curved correspondingly to the conveying surface.

3. The curved band conveyor as claimed in claim 2, the two carrier plates (110, 111) having second connecting holes (114), and the carrier frame (11) having, furthermore, vertically oriented ribs (112) with pins, wherein the pins can be plugged into the second connecting holes (114) of the upper and the lower carrier plate (110, 111), in order to connect the two carrier plates (110, 111) to one another.

4. The curved band conveyor as claimed in one of claims 1 to 3, the first and/or the second connecting holes being produced by means of laser cutting or by punching.

5. The curved band conveyor as claimed in one of claims 1 to 4, the radial struts comprising transverse struts (13) which are manufactured from a U-profile.

6. The curved band conveyor as claimed in one of claims 1 to 5, the radial struts comprising head part suspensions (13') which connect the outer and inner carrier frames (11, 12) to one another at a start and an end of the conveying distance.

7. The curved band conveyor as claimed in one of claims 1 to 6, the outer carrier frame (11) having a carrier plate (110) running in or parallel to the conveying surface, the guide rail (2, 2') being arranged on this carrier plate (110).

8. The curved band conveyor as claimed in one of claims 1 to 7, approximately the entire carrier stand (1) consisting of elements which are assembled by means of plug connections.

9. The curved band conveyor as claimed in one of claims 1 to 8, the conveyor chain (3) having outer and inner first link plates (30, 30') which run on the same side of the conveyor chain (3), the side facing away from the conveyor band (5), and the outer first link plates (30) having a larger area than the inner first link plates (30').

10. The curved band conveyor as claimed in claim 9, the at least one guide rail (2, 2') having a guide groove (20, 20') for the reception of the inner and outer first link plates (30, 30'), the guide groove (20, 20') having a stepped design corresponding to the surfaces of the inner and outer first link plates (30, 30').

11. The curved band conveyor as claimed in one of claims 1 to 10, the conveyor chain (3) being capable of being set by means of a chain tensioner (8), and the chain tensioner (8) having a pneumatic spring (85).

## Revendications

1. Convoyeur à courroie curviligne comprenant un bâti porteur (1) en forme de portion de cercle pour une courroie transporteuse (5) déplaçable le long d'une surface de transport en forme de portion de cercle, au moins un rail de guidage (2, 2') fixé au bâti porteur (1), une chaîne de transport (3) guidée dans le rail de guidage (2, 2') et une courroie transporteuse (5) déplaçable au moyen de la chaîne de transport (3) le long de la surface de transport, le bâti porteur (1) présentant un cadre porteur extérieur courbé (11), un cadre porteur intérieur (12) s'étendant concentriquement au cadre porteur extérieur et des montants radiaux (13, 13'), les montants radiaux (13, 13') pouvant être connectés de manière enfichable aux cadres porteurs extérieur et intérieur (11, 12),
**caractérisé en ce que** les cadres porteurs extérieur et intérieur (11, 12) présentent des premiers trous de connexion (113) pour recevoir des ergots d'enfichage des montants radiaux (13, 13') et au moins l'un des cadres porteurs (11 ; 12) présente une plaque porteuse (110 ; 111 ; 120 ; 121) ayant les trous de connexion (113), s'étendant horizontalement par rapport à la surface de transport.

2. Convoyeur à courroie curviligne selon la revendication 1, dans lequel le cadre porteur extérieur et/ou intérieur (11, 12) présente deux plaques porteuses (110, 111) s'étendant horizontalement par rapport à la surface de transport, lesquelles sont cintrées de manière correspondant à la surface de transport.

3. Convoyeur à courroie curviligne selon la revendication 2, dans lequel les deux plaques porteuses (110, 111) présentent des deuxièmes trous de connexion (114) et dans lequel le cadre porteur (11) présente en outre des nervures (112) orientées verticalement, avec des goupilles, les goupilles pouvant être enfichées dans les deuxièmes trous de connexion (114) des plaques porteuses supérieure et inférieure (110, 111), afin de connecter l'une à l'autre les deux plaques porteuses (110, 111).

4. Convoyeur à courroie curviligne selon l'une quelconque des revendications précédentes, dans lequel les premiers et/ou deuxièmes trous de connexion sont fabriqués par découpage au laser ou par estampage.

5. Convoyeur à courroie curviligne selon l'une quelconque des revendications précédentes, dans lequel les montants radiaux comprennent des montants transversaux (13) qui sont fabriqués à partir d'un profilé en U.

6. Convoyeur à courroie curviligne selon l'une quelconque des revendications précédentes, dans lequel les montants radiaux comprennent des suspensions de partie supérieure (13') qui relient les cadres porteurs extérieur et intérieur (11, 12) l'un à l'autre au niveau d'un début et d'une fin de la section de transport.

7. Convoyeur à courroie curviligne selon l'une quelconque des revendications précédentes, dans lequel le cadre porteur extérieur (11) présente une plaque porteuse (110) s'étendant dans ou parallèlement à la surface de transport, le rail de guidage (2, 2') étant disposé sur cette plaque porteuse (110).

8. Convoyeur à courroie curviligne selon l'une quelconque des revendications précédentes, dans lequel approximativement l'ensemble du bâti porteur (1) se compose d'éléments qui sont assemblés au moyen de connexions par enfichage.

9. Convoyeur à courroie curviligne selon l'une quelconque des revendications précédentes, dans lequel la chaîne de transport (3) présente des premières pattes extérieures et intérieures (30, 30') qui s'étendent du même côté de la chaîne de transport (3) opposé à la courroie transporteuse (5), les premières pattes extérieures (30) présentant une plus grande surface que les premières pattes intérieures (30').

10. Convoyeur à courroie curviligne selon la revendication 9, dans lequel l'au moins un rail de guidage (2, 2') présente une rainure de guidage (20, 20') pour recevoir les premières pattes intérieures et extérieures (30, 30'), la rainure de guidage (20, 20') étant réalisée de manière étagée de manière correspondant aux surfaces des premières pattes intérieures et extérieures (30, 30').

11. Convoyeur à courroie curviligne selon l'une quelconque des revendications 1 à 10, dans lequel la chaîne de transport (3) peut être ajustée au moyen d'un dispositif tendeur de chaîne (8) et dans lequel le dispositif tendeur de chaîne (8) présente un ressort de pression à gaz (85).
